# EUROPEAN PATENT SPECIFICATION

(11) **EP 2 621 210 B1**
(45) Date of publication and mention of the grant of the patent: **22.01.2014**
(21) Application number: 12290032.7
(22) Date of filing: 27.01.2012
(51) Int. Cl.: H04W 24/02

(54) **Method for determining cell configuration parameters in a wireless telecommunication network**
Verfahren zur Bestimmung der Zellkonfigurationsparameter in einem drahtlosen Telekommunikationsnetzwerk
Procédé pour déterminer les paramètres de configuration de cellule dans un réseau de télécommunication sans fil

(43) Date of publication of application: 31.07.2013
(73) Proprietor: Alcatel Lucent, 75007 Paris (FR)
(72) Inventor: Karla, Ingo, 46514 Schermbeck (DE)
(74) Representative: Wetzel, Emmanuelle

(56) References cited:
- WO-A1-2009/083035
- US-A1- 2007 225 029
- US-A1- 2010 298 022
- SUJUAN FENG ET AL: "Self-Organizing Networks (SON) in 3GPP Long Term Evolution", INTERNET CITATION, 20 May 2008 (2008-05-20), pages 1-15, XP007907980, Retrieved from the Internet: URL:http://www.nomor.de/uploads/gc/TQ/gcTQ fDWApo9osPfQwQoBzw/SelfOrganisingNetworksI nLTE_2008-05.pdf [retrieved on 2009-03-27]

## Description

The invention relates to the field of wireless digital telecommunication, more particularly to digital cellular wireless telecommunication networks.

### Background and related art

It is known in the state of the art to change data transmission parameters in one cell or in a plurality of cells in order to optimize mobile communication in the respective cells. Changing the data transmission parameters can cause interferences or decrease interferences. For example increasing the transmission power would increase the size of a cell and at the same time increase interferences caused in a neighboring cell. Other parameters such as handover parameters, antenna parameters or used frequencies for transmitting data have an impact on the quality of service of the telecommunication network and/or the energy consumption of the telecommunication network.

WO 2009/083035 A1 describes a method of upgrading a wireless mobile communications network deployed on the field, comprising: capturing network events from the wireless mobile communications network; obtaining network simulation data from an automated network simulation planning tool; combining the captured network events and the network simulation data to derive diagnostic indicators adapted to evidence criticalities in a current network configuration; and modifying the current network configuration to overcome the criticalities.

US 2010/298022 A1 describes a cellular radio communications network includes a plurality of radio cells. A target radio coverage is associated with each radio cell. Each operational radio cell provides an effective radio coverage defined by a transmission power value of said radio cell. A given transmission power value is applied to a particular set of radio cells. A radio cell is then selected. Thereafter, cellular information is obtained relating to a group of radio cells comprising the selected radio cell and neighboring cells. On the basis of the cellular information, the effective radio coverages of the cells of said group and the respective target radio coverages of the cells of said group are compared. If the effective radio coverage of at least one cell of the group of radio cells is less than its target radio coverage, respective new transmission power values are applied to radio cells of said group of cells. Certain steps are then repeated, as appropriate.

### Summary

It is an object of the present invention to provide an improved method for determining a set of replacement transmission parameters, an improved network entity, and an improved computer program product according to the independent claims. Embodiments of the invention are given in the dependent claims.

The invention relates to a method for determining a set of replacement transmission parameters for a plurality of cells of a digital cellular wireless telecommunication network for data transmissions in the digital cellular wireless telecommunication network. The method comprises determining constraints. Constraints may for example be unchangeable parameters, unusable frequencies or other constraints being not changeable by this method. For example this method is performed by a network entity and another network entity, for example a base station of another vendor, does not accept changes performed within this method. For example constraints may also be that certain frequencies can be used for data transmissions in the respective cells. For example the European Cognitive Radio Project QOSMOS defines frequencies that may be used under certain circumstances by digital cellular wireless telecommunication networks.

Further a set of current transmission parameters is determined, wherein the set of current transmission parameters comprises parameters currently used in the plurality of cells for data transmissions. Transmission parameters may also be referred to as cell configuration parameters. Transmission parameters may for example comprise transmission times, transmission frequencies, transmission powers, handover related parameters, and/or antenna parameters. Handover related parameters may for example be offsets when handovers are performed or any other parameter related to a handover procedure of a mobile device from a first base station to a second base station. Antenna parameters may for example be a radiation direction of the antenna or an antenna tilt.

Furthermore, several candidate sets of replacement transmission parameters are evaluated by considering the constraints. Each candidate set comprises transmission parameters that may be used for wireless telecommunication in the plurality of cells. Considering the constraints here means that it is considered that certain parameters may not be changed or may only be changed in a certain range because of the constraints. For example certain frequencies may not be used by the digital cellular wireless telecommunication network. In this case this is a constraint considered for evaluating the several candidate sets. Another constraint would be that a cell does not accept replacement parameters that are not determined on its own. Each candidate set is adapted for replacing the set of current transmission parameters. This means that each candidate set could be used for data transmissions in the plurality of cells. However, this does not mean that each candidate set would cause a better quality of service or more throughput in the plurality of cells than the current set of transmission parameters.

Then, network conditions are simulated for the plurality of cells for each candidate set of the several candidate sets. Simulating here means that the candidate sets are not applied in the plurality of cells. It is only a simulation. In other words, when the simulation is performed, offline calculations are performed. Data transmissions in the plurality of cells are not affected by these simulations. Afterwards, the simulated network conditions are compared with each other and with the current network conditions. A best set is determined from the candidate sets by using the results of the comparison. For example for each candidate set a quality indicator is determined that may be a relative value or an absolute value. Then these values are compared and a best set is determined. For example the network conditions for candidate sets A, B and C are simulated and the current network conditions when using the current set of transmission parameters D are also known. For example it is determined that parameters A are better than all the other parameters. In this case the candidate set A would be determined as the best set.

For determining the best set the various factors that are considered for determining the simulation results, such as the quality of service, the data throughput and/or the are taken into account with different or the same weighting factors. For example the quality of service is weighted very high as well as the data throughput. The energy consumption may be weighted not as high as the both previously mentioned indicators. The best candidate set is understood herein as the candidate set that optimizes the network conditions in the plurality of cells. Optimizing the network conditions comprises improving energy consumption, and/or quality of service, and/or data throughput, and/or interference conditions. It is possible that the best set is not explicitly numercially the best set (e.g. the one offering the best quality of service).

The best set is then set as the set of replacement transmission parameters. The set of replacement transmission parameters is used for wireless telecommunication in the plurality of cells instead of the current transmission parameters. In other words the current transmission parameters have been replaced by the replacement transmission parameters.

According to the invention the constraints comprise fixed parameters of at least one cell of the plurality of cells, and/or radio frequencies that are allowed to be used for wireless telecommunication in the plurality of cells. Parameters of at least one cell of the plurality of cells can be fixed for example because an administrator of the network has set these parameters as fixed for a reason not known to the plurality of cells. Another possibility would be that a base station of the at least one cell of the plurality of cells does not cooperate with other base stations of the wireless telecommunication network and does not accept to modify parameters being determined by a method according to embodiments of the invention.

Herein the term base station refers to a network entity which serves at least one cell of the digital cellular wireless telecommunication network. Several cells can be served by the same base station. A cell may also be referred to as a sector.

Radio frequencies that are allowed to be used for wireless telecommunication can also be whole frequency bands that are allowed to be used for wireless telecommunication or sub-bands. In other words, the term radio frequencies as used herein refer to a range of frequencies.

According to embodiments of the invention the allowed radio frequencies are Cognitive Radio frequencies. In the context of Cognitive Radio, one of the major challenges is to organize and to decide, which radio access entity (e.g. basestation) is using which part of the spectrum and with which power. This challenge is subject to strong inteactions between the basestations, such as inter-cell interferences and interactions in the "coverage areas" of different nodes.

As this issue is too complex for manual handling, powerful self-organizing networks (SON) techniques are required to solve this automatic self-organizing problem for Cognitive Radio.

Thereby distributed SON functionalities are needed, because of the diversity of the cognitive system with many different "players" who all want to paticipate at potentially using a part of the available spectrum and a centralized controll "of everything" is not possible.

Furthermore, the distributed SON solution shall optimize the situation individually for each cell, as in the potentially very diverse cognitive radio scenario, it is not possible to have the same configurations for each cell; each cell needs to be optimized, while considering all the interactions and couplings with other cells and with other radio nodes.

As a particular challenge, the SON entities and algorithms have to be "robust" against external "disturbences" and "robust" against "non-desired, strange, non-cooperating, ..." behaviour of other nodes within the whole cognitve system. For example, another node may not behave "correctly" and is causing much interference on a particular part of the spectrum or another node is non-cooperating and is doing whatever that other node "likes" to do. In such situations, the distributed cognitive SON system needs to optimize itself around that "disturbing node" and then optimize itself, its distributed cognitve SON participating nodes, in such a way, that they consider the distrurbance as a kind of external constraints and optimize around the non-cooperating other radio node.

This is a related challenge to mixing non-cooperating basestations from different vendors. For example when a vendor wants to sell small metro cells into an existing and non-cooperating macro-cell network of another vendor, then the small cells have to adapt and optimize themselves in the best possible way to the external situation imposed by the other vendors macro cells. Such a self-X feature would then allow the small metro cells to work well together with existing and non-cooperating macro basestations of the other vendor.

The European cognitve radio project QoSMOS (http://www.ict-qosmos.eu) is addressing exactly this challenge, and has introduced an architecture with distinct cognitive radio entities, the "Specturum Databases/Repositories etc", the "Spectrum Manager" and the "Resource Manager".
For clarity, the naming and functionalites is recalled as used in the QoSMOS project and are related to typical nodes in cellular mobile networks:
1) (Cognitive Radio) Spectrum Database(s), Repositories, Sensing Information,... :
   These are -possibly operator independent- entities - which provides information about the amount of spectrum, about the frequency bands, which are available in a particular area. This could be compared to (more or less) static network planning.
   This information could be considered as external constraints, which the SON entity for the Spectrum Manager has to obey.
2) (Cognitive Manager) Spectrum Manager ("CM-SM"):
   This functionality coordinates and decides which concrete frequency resources and power level are allowed be used by a particular cell. It needs to consider the interactions between different cells. This is related to other semi-static system optimizations like e.g. semi-static load balancing. The functionality of this cognitive manager could be rellated to an Operation&Maintainance Centre or to a powerful SON functionality which finds and sets the configuration parameters of a cell or basestation.
3) (Cognitive Manger) Resource Manager ("CM-RM"):
   This functionality schedules dynamically the resources to the mobile users on a very short time scale. This is related to the resource scheduler of a cell

Herein the "Spectrum Manager" may also be referred to as the network entity performing the various method steps.

While for the QoSMOS project this invention solves the Spectrum and Power configuration, adaptation and optimization challenge, the same invented distributed SON solutions can equally be implemented in LTE basestation product where a related SON challenge with strongly interacting+coupled parameters needs to be solved, also for several other SON use cases and for Light Radio. Best is a generic solution, which can be used as a builidng block to be added or adapted to several SON use cases in different applications.

In other words, cognitive radio could also be referred to as dynamic spectrum access. Dynamic spectrum access means that certain frequencies are allowed for certain times to be used. It is determined by measurements or by other information if these frequencies are allowed to be used. For example the frequencies are not allowed to be used if they are used by other systems or entities that are not associated with the digital cellular wireless telecommunication network.

According to embodiments of the invention the constraints are retrieved from a database, and/or determined by performing measurements, and/or entered manually, and/or received from at least one base station of the plurality of cells.

For example the constraints can be retrieved from a database, wherein the database is located inside the same network entity which also performs the method according to embodiments of the invention. The database may for example be stored on a storage medium such as a hard disc drive, a solid state drive, random access memory, read only memory and/or optical storage drives. For example the database defines base stations of the network which do not cooperate and do not accept parameters determined by the method according to embodiments of the invention. Another example would be that certain frequency ranges are comprised by the database which are allowed to be used by the digital cellular wireless telecommunication network. Another possibility is that the constraints are determined by performing measurements. This could also be referred to as sensing the spectrum. Sensing the spectrum means that it is measured, for example by the same network entity that also performs the other method steps, or another base station, which frequencies may be used for telecommunication in the network. For example some frequency ranges are defined as optionally being used by other systems. In this case it is measured if these frequency ranges are used by other systems. If the frequency ranges are not used by other systems they may be used for telecommunication in the telecommunication network. Another possibility would be to enter the constraints manually. This could be for example done by an administrator in an operation and maintenance center. The administrator could for example define certain frequency ranges that are not allowed to be used by the network or other parameters that are fixed or that may be varied only in a certain range. Another possibility is that the constraints are received from at least one base station of the plurality of cells. This means that the at least one base station sends the constraints to the network entity that performs the method according to embodiments of the invention. For example the base station sends a signal to the network entity that performs the method according to embodiments of the invention, wherein the signal defines certain parameters applied by the at least one base station as fixed. Another possibility would be that the at least one base station sends a signal to the network entity that performs the method according to embodiments of the invention, wherein this signal defines certain ranges for certain parameters which are allowed ranges. This means that the at least one base station would apply parameters inside these ranges. Parameters outside these ranges would not be applied by the at least one base station.

According to embodiments of the invention the method is performed by a network entity, which is associated with a first cell. The plurality of cells comprises the first cell and cells being located in a neighboring region of the first cell. In other words, the method is performed for a center cell, which is referred herein as first cell, and a neighboring area of this center cell. The network entity performing the method according to embodiments of the invention could either be associated with a base station or be part of a base station. The neighboring area of the first cell comprises at least direct neighbors of the first cell. Preferably, even second or third neighbors are comprised by the neighboring area. The size of the neighboring area may be determined according to network conditions. Choosing a relatively big neighboring area of the first cell has the advantage that the parameters determined by the method according to embodiments of the invention are simulated for a large number of cells. This results in the fact that the replacement parameters are most likely advantageous for a large region of the network. Choosing a relatively small neighboring area would reduce computation effort.

According to embodiments of the invention the neighboring area comprises direct neighbors of the first cell and neighbors of the direct neighbors. In other words the neighboring area comprises first neighbors of the first cell and second neighbors of the first cell. The second neighbors are the neighbors' neighbors.

According to embodiments of the invention the steps of evaluating, simulating, comparing, determining the best setting and using the best set are triggered by a periodic timer, and/or a random timer, and/or a trigger message, and/or a change of the current transmission parameters, and/or a change of the constraints, and/or a traffic load threshold. Using a periodic timer for triggering the steps is advantageous for example for defining time periods after which the method according to embodiments of the invention shall be performed.

Using a random timer is advantageous for avoiding that first changes performed by a first network entity are changed again by a second network entity before they are changed back again to the previously set parameters by the first network entity. This could for example happen when a first network entity for example sets a parameter set A, then a second network entity sets parameter set B and then the first network entity again sets the parameter set A. By using the random timer it can be avoided that always the first network entity performs the method according to embodiments of the invention before the second network entity. By using the random timer for example a third network entity could perform the method according to embodiments of the invention in between the first and the second network entity. By this change such previously described ring changes can be avoided.

A trigger message for triggering the method steps could for example be a message transmitted from at least one base station of the plurality of cells to the network entity performing the method according to embodiments of the invention. The trigger message can for example simply be a trigger to perform the method steps or another message indicating to perform the method steps. A change of the current transmission parameters can also trigger the method steps. For example the transmission parameters can be changed by another network entity, manually by an administrator or by another base station. In this case performing the method can be triggered when the change of the transmission parameters is detected.

The same applies for the constraints. If a change of the constraints is detected, the whole network situation may be changed and a replacement set of parameters may be advantageous for data transmissions in the network.

Also a traffic load threshold may be used for triggering the method steps. For example a traffic load threshold is defined and when the traffic load in at least one cell of the plurality of cells reaches the traffic load threshold the method steps are performed. This may be advantageous when replacement parameters could be better suited for handling the high traffic load.

According to embodiments of the invention the method is interrupted or cancelled when it is indicated that the set of current transmission parameters shall be changed. This may for example happen when the method according to embodiments of the invention is performed by a second network entity and a replacement set of transmission parameters is determined by this second network entity. In this case the first network entity performing the method according to embodiments of the invention interrupts or cancels the method. This is advantageous before any method step performed by the first network entity is based on the previously used transmission parameters because these transmission parameters are changed the basis for the method steps is not valid anymore and interrupting or cancelling the method is performed preferably. The method may also be interrupted or cancelled when the set of current transmission parameters is changed for another reason, for example a base station changes the current transmission parameters based on its own computations or another set of current transmission parameters is set by an administrator.

According to embodiments of the invention the current set of transmission parameters is received from base stations of the plurality of cells. The best set of transmission parameters is sent to each base station of the plurality of cells. In this case the steps of evaluating, simulating, comparing, determining the best set, setting and using the best set are performed at least a second time, only if it is determined that the constraints and/or the set of current transmission parameters have been changed significantly since having determined the constraints and/or the set of current transmission parameters most recently. For example a difference between the set of current transmission parameters and the best set is used for determining if the parameters have been changed significantly. For example the steps are only performed at least a second time if it is determined that the set of current transmission parameters differs more than a difference threshold from the best set of transmission parameters. The same applies analogously for the constraints. For example if the constraints differ only slightly the steps are not performed a second time because of this change. However, if the constraints have changed and the new constraints differ from the old constraints more than a constraints threshold it is determined that the steps are performed at least a second time.

According to embodiments of the invention each set of transmission parameters comprises at least one of the following parameters: transmission times, transmission frequencies, transmission powers, handover related parameters, and/or antenna parameters. The parameters transmission times and transmission frequencies may for example be used for avoiding interferences. For example the same frequencies may be used in neighboring cells at different transmission times. The transmission powers define the size of the respective cells and are also related to interferences caused by one cell with another. Antenna parameters comprise parameters such as radiation direction and antenna tilt. Handover related parameters may be signal thresholds for determining when a handover shall be performed and/or times for how long a signal of a target cell of the handover procedure has to be stronger than a signal power threshold.

According to embodiments of the invention the step of simulating is performed by dividing each cell of the plurality of cells into virtual sub areas and by simulating interference conditions and data transmission efficiency in the sub-areas. Using the sub-areas for simulating is advantageous for reducing computation effort and achieving good simulation results.

The term "data transmission efficiency" may also be referred to as "resource efficiency".

According to embodiments of the invention the simulation is performed based on previously performed measurements. For example the network entity performing the method knows from previously performed measurements the network conditions when applying certain parameters. For example the network entity knows an equation of how the cell size is changed when the transmission power is changed by a certain value.

According to embodiments of the invention the set of replacement transmission parameters is used for wireless telecommunication, only if the set of replacement transmission parameters has not been used for wireless telecommunication during a predetermined time period in the past, and/or the set of replacement transmission parameters lies inside a predetermined region for allowed transmission parameters, and/or the set of replacement transmission parameters does not downgrade network conditions in at least one cell of the plurality of cells more than a downgrade threshold.

By using the predetermined time period in the past it is avoided that changes that have been set by a first network entity are not changed back by a second network entity and then changed back again by the first network entity and so on. For example it could be the case that a first network entity sets the parameter set A, then the second network entity sets the parameter set B and then the first network entity again sets the parameter set A. This can be avoided by using the predetermined time period. If the parameter set A has been set in this predetermined time period the parameter set A is not set again for avoiding the previously described ping-pong change. Further, it may be advantageous for determining a region for allowed transmission parameters. For example only some frequencies are allowed for wireless telecommunication because of law restrictions or restrictions set by the administrator. Furthermore, it is avoided that the network conditions in one certain cell of the plurality of cells is downgraded by more than a downgrade threshold because this would be too disadvantageous for users being located in this cell.

In another aspect the invention relates to a network entity comprising means for determining constraints, means for determining a set of current transmission parameters, wherein the set of current transmission parameters comprises parameters currently used in the set of plurality of cells. Further, the network entity comprises means for evaluating several candidate sets of replacement transmission parameters, wherein each candidate set is adapted for replacing the set of current transmission parameters. Furthermore, the network entity comprises means for simulating network conditions for the plurality of cells for each candidate set of the several candidate sets, means for comparing the simulated network conditions, means for determining a best set from the candidate sets by using the comparison results, means for setting the best set as the set of replacement transmission parameters, and means for using the set of replacement transmission parameters for wireless telecommunication in the plurality of cells. The various means of the network entity may be implemented by a processor executing program instructions stored on a storage medium. The network entity is adapted for performing a method according to embodiments of the invention.

In another aspect the invention relates to a computer program product comprising instructions that when being executed cause a network entity to perform a method according to embodiments of the invention.

The following description explains embodiments of the invention in a more detailed way.

### 1) Fully distributed CM-SM SON architecture:

There is an individual "Cognitive Manager Spectrum Manager" (CM-SM) in (or for) each (e.g.) radio access node, e.g. for each basestation or for each cell.

This CM-RM decides on a "longer", e.g. semi-static time scale, which part of the spectrum portfolio (which part(s) of the bandwidth part(s), which part(s) of the frequencies, which part(s) of the spectrum(s)) and which other relevant configuration parameters (i.e. transmission power) the "Cognitive Manager Resource Manager" (CM-RM) is allowed to used. The CM-RM then operates on a shorter time scale (e.g. dynamic) within the parts of the spectrum portfolio and within the configuration constraints set by the CM-SM.

### 2) The SON entity of the CM-SM Operates on a "distributed local area":

Each CM-SM is optimizing a "local area", this means it is optimizing the spectrum portfolio and the relevant parameters (such as i.e. transition power) for itself, and for other "neighbouring" CM-SMs within a "local area".

Due to the interactions and due to the interferences the spectrum- and power settings of neighbouring CM-SM entities are highly coupled, they cannot be individually optimized, and during the parameter finding process, the situation, setting, interactions with and from neighbouring entities have to be considered. The local area contains that group of CM-SMs which need (or should) be considered as there are directly interactions with the "centre" CM-SM.

### 3) CM-SM SON entity optimization procedure

The SON entity/functionality of the "centre" CM-SM" is evaluating possible candidate sets of parameter combinations out of the complete parameter space of all possible parameter combinations within the CM-SMs in the local area. The simplest algorithm would be to assess all options via brute force, but there are more intelligent and more runtime efficient search algorithms.

Thereby each particular parameter set is predicted via a "sufficiently well suited" prediction model to access the expected performance of the system when this particular parameter set would be installed. The prediction of the future network performance is very tricky, requires innovative novel approaches, and this solution is part of another invention. It shall be noted again, that this is an offline assessment of possible candidate parameter sets, without actually installing (testing trying) these in the field. After having virtually assessed a/the large set of candidate combinations, the SON entity then selects the best suited one and these settings are installed within the local area.

In this way, the optimal (predicted) parameter set is found and installed for each CM-SM within the local area.

### 4) CM-SM signallings / message exchanges

The CM-SMs exchange the following kind of information
a) Information about their current configurations and settings, e.g. which part of the spectrum portfolio is
   assigned to use and parameter configurations such as e.g. transmission power.
b) Information about -e.g. averaged values- about currently experienced (average) "radio and load
   conditions", such as e.g. about their traffic load and about how much interference is observed on
   a particular part of the spectrum portfolio.
c) Commands (suggestions) from one CM-SM to another CM-SM to use a certain part of the spectrum
   portfolio, and to use a certain configuration parameters, such as e.g. a certain transmission power.
d) Optionally, direct trigger messages to initiate an action such as to start the local area evaluation +
   optimization procedure.
   Thereby the invention should not be restricted to the actual message exchange path, i.e. the invention shall protect all options, whether the exchange is via direct messages between the CM-RM entities, whether the message exchange goes via the core network or whether maybe -e.g. via tunnelling techniques- the transport formats of underplaying legacy network.

### 5) CM-SM triggers, timers, delays, interrupts

The local optimization procedure of the SON entity of one CM-SM is or can be triggered by the following events:
a) Periodic timer, optionally with a short random time variation: Each SON entity of each CM-SM may "periodically" trigger itself to check the situation and to evaluate whether to run the local area optimization procedure.
b) When the CM-SM receives new status information, e.g. a changed configuration in its neighbourhood, or a new load or interference information, or new external constraints (e.g. spectrum database), then the SON entitiy of the CM-SM is triggering itself to evaluate the situation to access whether or not to run the complete local area optimization procedure.
c) External trigger, asking the CM-SM to assess and if needed to optimize the situation.
   An external entity (e.g. spectrum database) or the CM-RM have the possibility to ask the CM-SM to optimize its local area situation. The CM-RM may evaluate itself that there is the room for optimization (e.g. the CM-RM evaluates, that it may better be assigned more spectrum resources) and is then asking its CM-SM to make a reevaluation of the situation - and thereby considering the new -e.g. high load- situation within the CM-RM.
d) All trigger timings have an -e.g. small- random component in order to make it likely that different cells start and finish their optimization procedures at different times. (But when this case somewhen occurs, then see next point). Different kind of actions/events may have different timer delays in order to priories the order of which CM-SM runs (with a large probability) its SON optimization first.
e) Interrupts: If a CM-SM is currently running the optimization procedure, and exactly when executing the computations this CM-SM is at the same time receiving new external information, such as e.g. a changed spectrum portfolio in the neighbouring cell, then the already started optimization procedure is stopped, no spectrum or parameters are changed, and a new optimization procedure is scheduled to be re-started in the near future (with a small random delay component)
   Prior to running the actual optimization procedure with varying all the parameter combinations, the SON algorithm may optionally check or evaluate whether the situation has "sufficiently" changed since the last optimization procedure in order to decide whether actually running the optimization procedure is likely to improve the situation, or whether it may not be necessary because the result of the previous optimization run is still valid and thus this newly triggered optimization procedure may be skipped.

### 6) Ensuring and enforcing stability and convergence in these distributed CM-SM SON entities:

These stability and convergence issues are a very critical aspect, and needs to be solved by intelligent and advanced techniques. Different SON entities optimize parameters of each other and of other cells, there are several - independent- SON entities who all try to set/configure on the same parameters, as the local areas of different SON entities strongly overlap. But this is not an issue arising from the tool of "local areas". Even if each SON entity would only configure its own CM-SM, then still there are strong interactions between neighbouring CM-SMs (interferences, spectrum coordination issues, "CM-SM controlled areas" (e.g. cell areas) etc.

In these distributed CM-SM entities, there are i.e. two kind of stability effects which risk to occur:
1) Ping-Pongs and Ring-Ping-Pongs: The SON entity of one CM-SM is changing a parameter and then another CM-SM entity is changing it back to its original value.
2) Propagating wave of changes: One (first) SON entity of one (first) CM-SM is changing a (first) parameter.
   This change then induces a new SON decisions in a (second) SON entity of a (second) CM-SM with the result that a (second) parameter is changed. This change of the (second) parameter then leads -via a third
   SON process to a change in a third parameter ... and so on.

The following stability and robustness solutions are to be employed:
a) History lists, including information of the surrounding cells, in order to detect Ping-Pong and Ring-Ping-Pongs
b) Selection of a possibly suitable parameter combination in order to break the (Ring-) Ping-Pong loop.
   □ Temporarily storing a (large) set of acceptable parameter settings and
   D thereafter choosing a suitable combination out of the pre-stored ones in order to break the loop.
c) Considering the "change cost" for performing a particular type of parameter change.
d) Optionally including self learning functionalities to dynamically modify the parameter change costs for individual cells.
e) Preference to restrict any modifications to an as small local area as possible.

Optionally the sensitivity (damping) threshold can be made self-learningly, e.g. in such a way, that the threshold may slightly be increased if needed or if beneficial.

### 7) Handling and Optimizing around non-cooperating nodes and handling erroneous or disturbing situations.

Optimally, all nodes have a SON entity implemented, cooperate and work correctly. However, the situation can occur, that there are nodes which do not have a powerful SON functionality, or which do not cooperate such as not following orders, and it may also occur that a node shows erroneous or a particular fixed behaviour such as that node transmits on a certain frequency band but without any possibilities of the SON system to influence the behaviour of that other node. This non-cooperating behaviour could e.g. occur, when the SON supporting basestations are installed in an area where also non-SON supporting basestations of another vendor are present. In this case, the SON supporting basestations have to handle this situation and self-organizingly optimize themselves in the best possible way to the given situation imposed by the disturbing other vendors node.

During the local area parameter optimizations, the SON algorithm in the (centre) cell searches and evaluates the available parameter space within the local area, which includes the option to modify configuration parameters in neighbouring cells. In the case, that another cell within the local area, e.g. another cell nearby which causes interference, does not support (for whatever reason) the SON features, then the (centre) cell considers the settings of the other non-cooperating cell as fixed constraints which cannot be modified. Then the parameter search algorithm analyses the possible parameter variations in those cells within the local area which support the SON feature. Thereby the SON algorithm "optimizes around" the non-cooperating node; the SON supporting cells self-optimize themselves to the best possible solution, using their SON-degrees-of-freedom, to adapt themselves to the given external situation of other cells.

One typical application is that new cells are added to an existing network which does not support SON -such as e.g. an old or other vendors macro cell network. Then the SON-supporting small metro cells optimize all their own possible configuration parameters in such a way, that these are optimally set to cope with the external situation. As a result, the newly added cells adapt themselves automatically to ensure that they will work well together with the existing non- cooperating network.

### Brief description of the drawings

- Fig. 1: is a schematic view of a digital cellular wireless telecommunication network,
- Fig. 2: is a block diagram of a network entity and a base station being adapted for performing a method according to embodiments of the invention,
- Fig. 3: is a schematic view of a plurality of base stations and network entities being adapted for performing a method according to embodiments of the invention,
- Fig. 4: is a block diagram illustrating the message exchange between network entities according to embodiments of the invention,
- Fig. 5: is a block diagram illustrating the message exchange between a network entity and base stations according to embodiments of the invention,
- Fig. 6: is a schematic view of a digital cellular telecommunication network according to embodiments of the invention,
- Fig. 7: is a block diagram of a network entity according to embodiments of the invention, and
- Fig. 8: is a flow diagram of a method according to embodiments of the invention.

### Detailed description

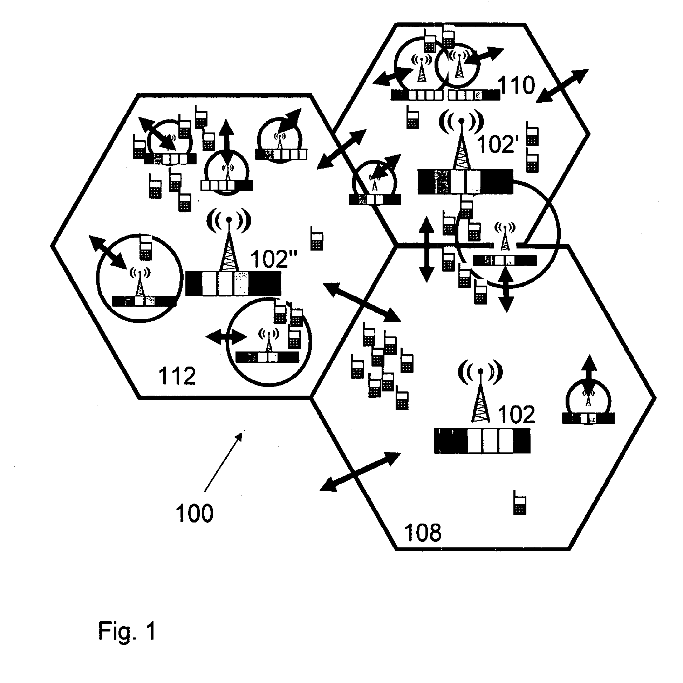

Fig. 1 is a schematic view of a digital cellular wireless telecommunication network 100 comprising a plurality of cells 108, 110 and 112. The cells 108-112 may also be referred to as sectors. Cell 108 is served by base station 102, cell 110 is served by base station 102', and cell 112 is served by base station 102". Although in Fig. 1 each cell is served by one base station it may be the case that one base station serves several cells. Fig. 1 further comprises smaller base stations (without reference sign) that serve cells which lie inside the cells 108, 110 and 112. Each base station 102 uses resource blocks for digital telecommunication with mobile devices. Resource blocks may for example a frequency range that is used for a time period for telecommunication in the respective cell. In Fig. 1 the resource blocks are schematically depicted as blocks below the respective base station 102. For example base station 102 uses three out of six resource blocks. Base station 102 uses the first, the second and the sixth resource block. Base station 102' uses all six resource blocks and base station 102" uses four resource blocks, namely the first and the fourth, the fifth and the sixth. Using the same resource blocks neighboring cells may cause interferences for communication with mobile devices in the region where the two cells overlap. Further interferences may be caused by the smaller base stations that serve cells that lie inside cells 108, 110 and 112. Parameters used for telecommunication in the respective cells are for example the resource blocks, and the transmission power. The transmission power may be used for varying the cell size as indicated by the arrows in Fig. 1. For example when the transmission power of base station 102 is increased the cell size of cell 108 is also increased and interferences between cell 108 and cells 110 and 112 may also become more significant. Another parameter that can be set for each base station 102 are the resource blocks. A resource block is a frequency range and time period that is used for transmitting data inside the cell. When the same frequency range is used at the same time in neighboring cells interferences may happen. By optimizing the parameters described above, interferences may be decreased and telecommunication in the network 100 is made more comfortable for users.

For example the base stations 102, 102' and 102" are adapted to accept parameter changes that are determined by a method according to embodiments of the invention. However, the smaller base stations that serve the cells that lie inside the cells 108-112 may not be adapted to accept external changes. For example one or more of the smaller base stations use parameters that are set manually by an administrator. The parameters used by these smaller base stations are considered for the method according to embodiments of the invention as constraints such as other constraints of the network 100. This is advantageous because the parameters of the base stations 102, 102' and 102" can be optimized by methods according to embodiments of the invention although the smaller base stations cannot be optimized in the same way. Other constraints for the method according to embodiments of the invention can be for example the fact that only certain frequency ranges are allowed to be used for data transmissions in the cells 108-112.

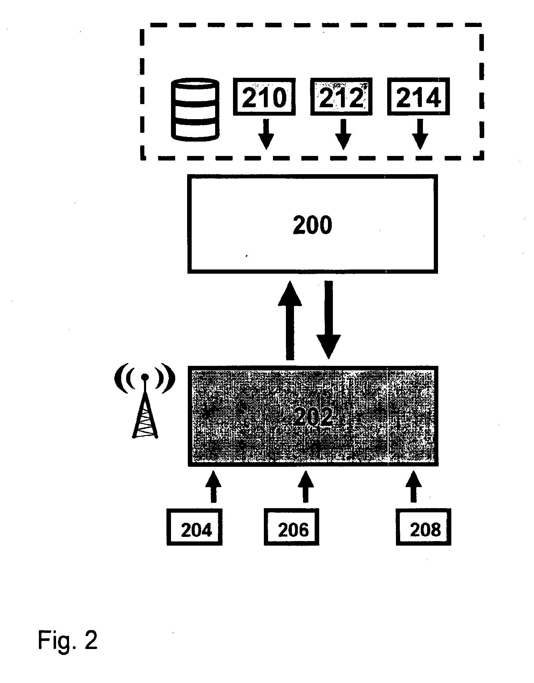

Fig. 2 is a block diagram of a network entity 200, and a base station 202. The network entity is adapted for performing a method according to embodiments of the invention. The network entity retrieves information from a spectrum database 210, spectrum sensing 212, and/or further information about network conditions 214. The base station 202 retrieves information from other base stations 204, information from mobile devices 206, and/or information about interferences from other network devices or from a database. In the example of figure 2, the network entity 200 uses the information retrieved from the spectrum database 210, spectrum sensing 212 and the further information 214 for determining constraints, which may for example be frequencies that are allowed to be used or parameters of other base stations that cannot be changed. Afterwards a set of current transmission parameters is determined by the network entity 200. The set of current transmission parameters is determined by requesting it from base station 202. Afterwards, several candidate sets of replacement transmission parameters are evaluated by network entity 200. When performing the evaluation step network entity 200 considers the constraints. Preferably the several candidate sets are evaluated by varying the current transmission parameters.

Then, the network entity 200 simulates network conditions for the plurality of cells for each candidate set of the several candidate sets. The simulation results are compared with each other and it is determined which set from the candidate sets is the best set. Then, the best set is transmitted to base station 202 and is used for data transmissions in the respective cell.

When performing this method the network entity 200 considers the information 210, 212 and 214. The information may be previously acquired or directly measured at the time of performing the method. For example the network entity 200 retrieves information from the spectrum database concerning frequency ranges that may be used for telecommunication. Then, further information is retrieved from spectrum sensing 212. Spectrum sensing could for example mean that certain frequency ranges that are allowed to be used are sensed for data transmissions from other systems. If there are no data transmissions from other systems the respective frequency ranges can be used for wireless telecommunication by base station 202. Base station 202 can retrieve information such as information about interferences, quality of service, energy consumption, and/or traffic load from other base stations and forwards this information 204 to network entity 200. Then, network entity 200 can consider this information also for evaluating the candidate sets and determining the best set. Further, the base station 202 can use information 206 from mobile devices and forward this information 206 also to network entity 200. This information 206 may for example be sensing information that has been sensed by the mobile devices. Also information about network conditions 208, such as information about interferences, quality of service, energy onsumption, and/or traffic load can be forwarded by base station 202 to network entity 200.

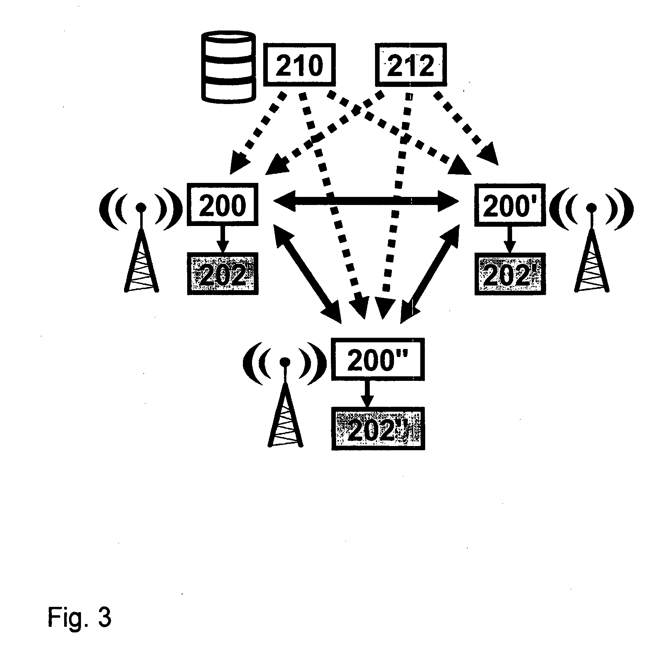

Fig. 3 is a block diagram of several base stations 202, 202', and 202" with respective network entities 200, 200' and 200". Each network entity 200 is associated with a base station 202. The network entities 200 can exchange information with each other and retrieve further information from database 210 and/or from spectrum sensing 212.

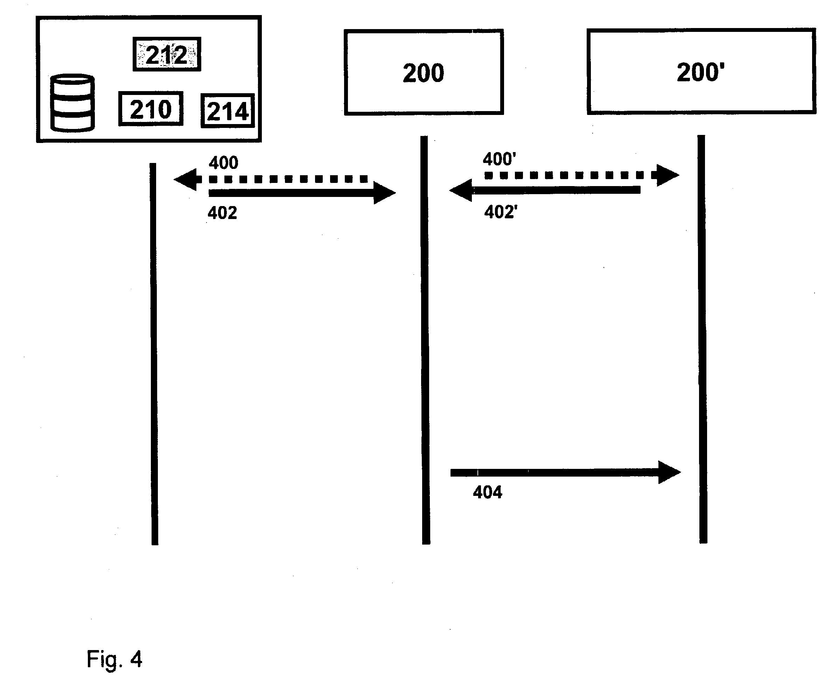

Fig. 4 is a block diagram illustrating the message exchanged between network entities 200 and 200'. First, network entity 200 requests information from database 210, from spectrum sensing 212 and/or further information about network conditions 214 by transmitting request message 400 to the database. The database may for example be located inside network entity 200 or in another network entity, for example a central network entity. The database may for example be stored in a storage medium. The information requested by network entity 200 is transmitted to network entity 200 from the database by transmitting message 402 as a response to the request message 400. Optionally network entity 200 may also request information from the second network entity 200' by transmitting request message 400' to network entity 200'. Network entity 200' then transmits response message 402' that comprises the requested information to network entity 200. Then, network entity 200 determines the candidate sets and simulates network conditions with these candidate sets and determines the best candidate set. It is important to be noted that network entity 200 only simulates the network conditions. At this time no parameters in the wireless telecommunication network have been changed. The best set of parameters is then determined and transmitted in message 404 to network entity 200'. Message 404 can be an install command that instructs network entity 200' to apply the determined parameter set. Alternatively message 404 can only be a suggestion and network entity 200' is not forced to apply the determined parameters.

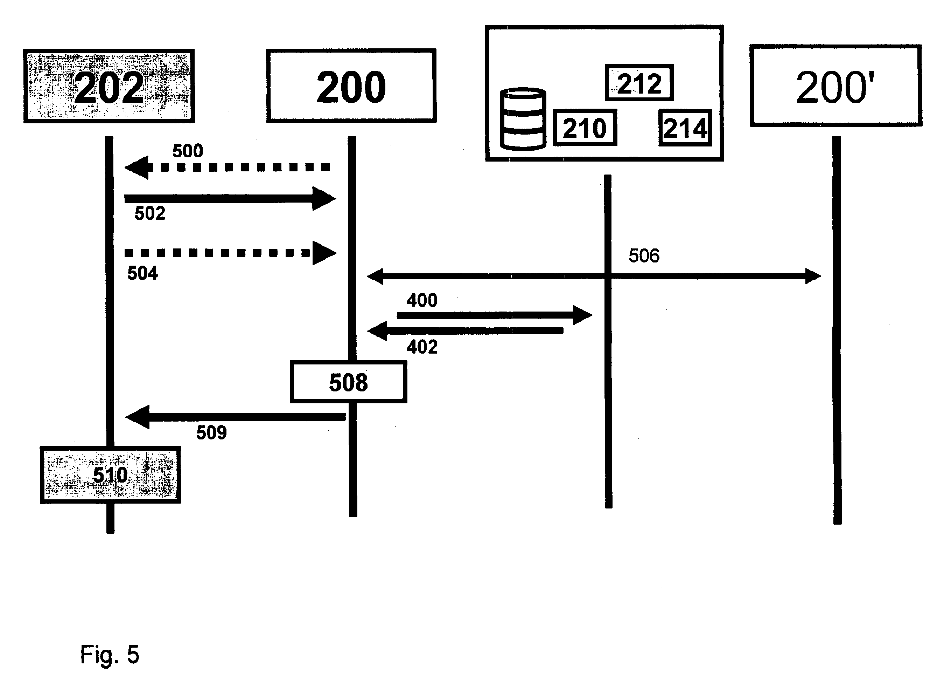

Fig. 5 is a block diagram illustrating message exchange between two network entities 200, 200' and base station 202. First, network entity 200 requests information about network conditions and/or currently used parameters from base station 202 by transmitting the request 500 to base station 202. Base station 202 then answers this request by transmitting information 502. Information 502 may for example be information about currently used parameters, constraints, and/or information about network conditions. Information about network conditions may for example be interference information, cell load information or information about handover parameters used by the cells served by base station 202.

Optionally the base station 202 may also transmit a request for resources 504 to the network entity 200. The request for resources indicates how many and/or which resources are required by the base station for data transmissions in the respective cell. The request 504 can be considered by the network entity 200 when evaluating the candidate sets. It is also possible for the network entity 200 to ignore the request 504.

Network entity 200 may also exchange information in step 506 with another network entity 200'. The exchange of information may be advantageous for both network entities 200 and 200' as both network entities need as much information as possible about the plurality of cells for which the replacement set of parameters shall be determined in order to determine the best possible set. Network entity 200 may also request information from spectrum sensing 212, spectrum database 210 and/or further information about network conditions 214 by transmitting request message 400 to the database. The database may transmit a response message 402 comprising the requested information to network entity 200. The information transmitted within the response message 402 may be previously acquired information or information acquired at that moment. In step 508 network entity 200 evaluates the candidate sets, simulates the network conditions for each candidate set and determines the best candidate set. Then, by sending message 509, the replacement set of parameters is transmitted to base station 202 and optionally also to other base stations being not depicted in Fig. 5. The replacement set of parameters is then used in step 510 by the base station 202 for data transmissions in the cell served by base station 202.

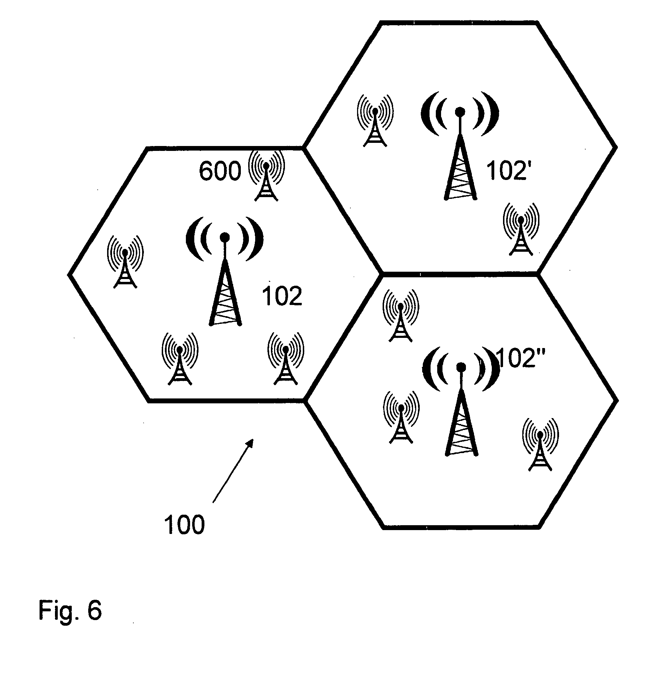

Fig. 6 is a schematic view of a digital cellular wireless telecommunication network comprising a plurality of base stations 102. Each base station 102 serves one cell, which may also be referred to as a sector. In each cell at least one smaller base station 600 is located. The smaller base station 600 can be considered by the method according to embodiments of the invention as constraints. The parameters of the smaller base station 600 may not be changed by the method according to embodiments of the invention. In other words, a network entity according to embodiments of the invention may determine a replacement set of transmission parameters for base stations 102, 102' and 102". However, the method may not determine replacement parameters for the small base station 600. This is why these parameters are considered as constraints in the sense of the invention. This helps to optimize the parameters of base stations 102, 102' and 102" by considering the unchangeable parameters of the smaller base station 600.

Fig. 7 is a block diagram of a network entity 700. The network entity 700 comprises a processor 702 and a storage medium 704. The storage medium 704 comprises program instructions 705 that may be executed by a processor 702. The network entity 700 further comprises an interface 706 which is adapted for communication with another network entity and/or a base station according to embodiments of the invention. Optionally the storage medium 704 may also comprise a database comprising previously acquired information that may be used for determining the candidate set according to embodiments of the invention.

In operation, the processor 702 executes program instructions 705 in storage medium 704. This causes the processor 702 to determine constraints. The constraints may for example be fixed parameters of at least one cell of the plurality of cells and/or radio frequencies that are allowed to be used for wireless telecommunication in the plurality of cells. Then, the processor 702 determines a set of current transmission parameters. These current transmission parameters are currently used in the plurality of cells by the base stations for wireless telecommunication. The processor 702 then evaluates several candidate sets of replacement transmission parameters, which consider the constraints. Then, the processor 702 simulates network conditions for the plurality of cells for each set of the several candidate sets. Simulating the network conditions means that the parameters are not set. Simulation may be performed by a simulation algorithm. The simulated network conditions are compared and a best set from the candidate sets is determined by the processor 700. This best set is then set as the replacement set of transmission parameters and is transmitted via interface 706 to the base stations and optionally also to other network entities.

The network entity 700 may be associated with only one base station, which means that the method is performed in a self-organized distributed manner.

Fig. 8 is a flow diagram of a method according to embodiments of the invention. In step S1 constraints set by the cellular wireless telecommunication network are determined. These may for example be fixed parameters set by an administrator or frequency ranges that are allowed to be used for wireless telecommunication. In step S2 a set of current transmission parameters is determined. For example the set of current transmission parameters is transmitted to the network entity by a base station. Several candidate sets are evaluated in step S3. These candidate sets may be replacement transmission parameters and consider the constraints. In step S4 network conditions are simulated for each candidate set. In step S5 these network conditions are compared and in step S6 a best set from the candidate sets is determined. In step S7 the best set is set as the set of replacement transmission parameters, which is then used in step S8 for wireless telecommunication in the plurality of cells.

### List of reference numerals

- 100: digital cellular wireless telecommunication network
- 102: base station
- 108: cell
- 110: cell
- 112: cell
- 200: network entity
- 202: base station
- 204: information from other base stations
- 206: information from mobile devices
- 208: interferences
- 210: spectrum database
- 212: spectrum sensing
- 214: further information about network conditions
- 400: request
- 402: response
- 404: install command
- 500: request
- 502: information
- 504: request for resources
- 506: information exchange
- 508: decision
- 509: replacement set of parameters
- 510: use replacement set of parameters
- 600: other base station
- 700: network entity
- 702: processor
- 704: storage medium
- 705: program instructions
- 706: interface

## Claims

1. A method for determining a set of replacement transmission parameters for a plurality of cells (108; 110; 112) of a digital cellular wireless self-organizing telecommunication network (100) for transmissions, wherein the method comprises:
- determining (S1) constraints, wherein the constraints comprise at least one of:
• fixed parameters of at least one cell of the plurality of cells (108; 110; 112);
• radio frequencies that are allowed to be used for wireless telecommunication in the plurality of cells (108; 110; 112);
- determining (S2) a set of current transmission parameters, wherein the set of current transmission parameters comprises parameters currently used in the plurality of cells (108; 110; 112);
- evaluating (S3) several candidate sets of replacement transmission parameters by considering the constraints, wherein each candidate set is adapted for replacing the set of current transmission parameters;
- simulating (S4) network conditions for the plurality of cells (108; 110; 112) for each candidate set of the several candidate sets;
- comparing (S5) the simulated network conditions with each other and with current network conditions;
- determining (S6) a best set from the candidate sets by using the results of the comparison, wherein the best set is the candidate set that optimizes the network conditions in the plurality of cells;
- setting (S7) the best set as the set of replacement transmission parameters;
- using (S8) the set of replacement transmission parameters for wireless telecommunication in the plurality of cells (108; 110; 112).

2. Method according to claim 1, wherein the allowed radio frequencies are cognitive radio frequencies.

3. Method according to any one of the preceding claims, wherein the constraints are retrieved from a database, and/or determined by performing measurements, and/or entered manually, and/or received from at least one base station (202) of the plurality of cells (108; 110; 112).

4. Method according to any one of the preceding claims, wherein the method is performed by a network entity (200; 700), which is associated with a first cell, wherein the plurality of cells (108; 110; 112) comprises the first cell and cells being located in a neighbouring area of the first cell.

5. Method according to claim 4, wherein the neighbouring area comprises direct neighbours of the first cell and neighbours of the direct neighbours.

6. Method according to any one of the preceding claims, wherein the steps of evaluating, simulating, comparing, determining the best set, setting and using the best set are triggered by at least one of:
- a periodic timer;
- a random timer;
- a trigger message;
- a change of the current transmission parameters;
- a change of the constraints;
- a traffic load threshold.

7. Method according to any one of the preceding claims, wherein the method is interrupted or cancelled, when it is indicated that the set of current transmission parameters shall be changed.

8. Method according to any one of the preceding claims, wherein the current set of transmission parameters is received from base stations of the plurality of cells (108; 110; 112), and wherein the best set of transmission parameters is sent to each base station (202) of the plurality of cells (108; 110; 112).

9. Method according to any one of the preceding claims, wherein each set of transmission parameters comprises at least one of:
- transmission times;
- transmission frequencies;
- transmission powers;
- handover related parameters;
- antenna parameters.

10. Method according to any one of the preceding claims, wherein the step of simulating is performed by dividing each cell of the plurality of cells (108; 110; 112) into virtual sub-areas and by simulating interference conditions and data transmission efficiency in the sub-areas.

11. Method according to any one of the preceding claims, wherein the simulation is performed based on previously performed measurmenets.

12. Method according to any one of the preceding claims, wherein the set of replacement transmission parameters is used for wireless telecommunication, only if the set of replacement transmission parameters has not been used for wireless telecommunication during a predetermined time period in the past, and/or the set of replacement transmission parameters lies inside a predetermined region for allowed transmission parameters, and/or the set of replacement transmission parameters does not downgrade network conditions in at least one cell of the plurality of cells (108; 110; 112) more than a downgrade threshold.

13. A network entity (200; 700) for a self-organizing telecommunication network comprising:
- means (702) for determining constraints, wherein the constraints comprise at least one of:
• fixed parameters of at least one cell of the plurality of cells (108; 110; 112);
• radio frequencies that are allowed to be used for wireless telecommunication in the plurality of cells (108; 110; 112);
- means (702) for determining a set of current transmission parameters, wherein the set of current transmission parameters comprises parameters currently used in the plurality of cells (108; 110; 112);
- means (702) for evaluating several candidate sets of replacement transmission parameters, wherein each candidate set is adapted for replacing the set of current transmission parameters;
- means (702) for simulating network conditions for the plurality of cells (108; 110; 112) for each candidate set of the several candidate sets;
- means (702) for comparing the simulated network conditions with each other and with current network conditions;
- means (702) for determining a best set from the candidate sets by using the comparison results, wherein the best set is the candidate set that optimizes the network conditions in the plurality of cells;
- means (702) for setting the best set as the set of replacement transmission parameters;
- means (702) for using the set of replacement transmission parameters for wireless telecommunication in the plurality of cells (108; 110; 112).

14. A computer program product (704) comprising instructions (705) that when being executed cause a network entity (200; 700) to perform a method according to any one of the claims 1-12.

## Patentansprüche

1. Verfahren zur Bestimmung eines Satzes von Ersatzübertragungsparametern für eine Vielzahl von Zellen (108; 110; 112) eines digitalen drahtlosen zellularen selbstorganisierenden Telekommunikationsnetzwerks (100) für Übertragungen, wobei das Verfahren umfasst:
- Ermitteln (S1) von Nebenbedingungen, wobei die Nebenbedingungen mindestens eine der folgenden Bedingungen umfassen:
• Festgelegte Parameter mindestens einer Zelle der Vielzahl von Zellen (108; 110; 112);
• Funkfrequenzen, deren Nutzung für drahtlose Telekommunikation in der Vielzahl von Zellen (108; 110; 112) zulässig ist;
- Ermitteln (S2) eines Satzes von aktuellen Übertragungsparametern, wobei der Satz von aktuellen Übertragungsparametern Parameter umfasst, die gegenwärtig in der Vielzahl von Zellen (108; 110; 112) angewendet werden;
- Bewerten (S3) mehrerer Kandidatensätze von Ersatzübertragungsparametern unter Berücksichtigung der Nebenbedingungen, wobei jeder Kandidat geeignet ist, den Satz von aktuellen Übertragungsparametern zu ersetzen;
- Simulieren (S4) von Netzwerkzuständen für die Vielzahl von Zellen (108; 110; 112) für jeden Kandidatensatz der mehreren Kandidatensätze;
- Vergleichen (S5) der simulierten Netzwerkzustände mit jedem anderen und mit den aktuellen Netzwerkzuständen;
- Ermitteln (S6) eines besten Satzes unter den Kandidatensätzen unter Verwendung des Vergleichsergebnisses, wobei der beste Satz derjenige Kandidatensatz ist, welcher die Netzwerkzustände in der Vielzahl von Zellen optimiert;
- Einstellen (S7) des besten Satzes als den Satz von Ersatzübertragungsparametern;
- Verwenden (S8) des Satzes von Ersatzübertragungsparametern für drahtlose Telekommunikation in der Vielzahl von Zellen (108; 110; 112).

2. Verfahren nach Anspruch 1, wobei die zugelassenen Funkfrequenzen kognitive Funkfrequenzen sind.

3. Verfahren nach einem beliebigen der vorstehenden Ansprüche, wobei die Nebenbedingungen aus einer Datenbank abgerufen, und/oder durch Durchführen von Messungen ermittelt, und/oder manuell eingegeben, und/oder von mindestens einer Basisstation (202) der Vielzahl von Zellen (108; 110; 112) empfangen werden.

4. Verfahren nach einem beliebigen der vorstehenden Ansprüche, wobei das Verfahren von einer Netzwerkentität (200, 700), welche mit einer ersten Zelle assoziiert ist, durchgeführt wird, wobei die Vielzahl von Zellen (108; 110; 112) die erste Zelle und Zellen, die in einem Nachbarschaftsbereich der ersten Zelle liegen, umfasst.

5. Verfahren nach Anspruch 4, wobei der Nachbarschaftsbereich direkte Nachbarn der ersten Zelle und Nachbarn von direkten Nachbarn umfasst.

6. Verfahren nach einem beliebigen der vorstehenden Ansprüche, wobei die Schritte des Bewertens, des Simulierens, des Vergleichens, des Ermittelns des besten Satzes, des Einstellens und des Verwendens des besten Satzes durch zumindest eines von entweder
- einem periodischen Zeitgeber;
- einem Zufallszeitgeber;
- einer Triggernachricht;
- einer Veränderung der aktuellen Übertragungsparameter;
- einer Veränderung der Nebenbedingungen;
- einem Verkehrslastgrenzwert
ausgelöst werden.

7. Verfahren nach einem beliebigen der vorstehenden Ansprüche, wobei das Verfahren unterbrochen oder abgebrochen wird, wenn angezeigt wird, dass der Satz von aktuellen Übertragungsparametern geändert werden soll.

8. Verfahren nach einem beliebigen der vorstehenden Ansprüche, wobei der aktuelle Satz von Übertragungsparametern von Basisstationen der Vielzahl von Zellen (108; 110; 112) empfangen wird, und wobei der beste Satz von Übertragungsparametern an jede Basisstation (202) der Vielzahl von Zellen (108; 110; 112) gesendet wird.

9. Verfahren nach einem beliebigen der vorstehenden Ansprüche, wobei jeder Satz von Übertragungsparametern zumindest eines von entweder
- Sendezeiten
- Sendefrequenzen
- Sendeleistungen
- auf Handover bezogene Parameter
- Antennenparameter
umfasst.

10. Verfahren nach einem beliebigen der vorstehenden Ansprüche, wobei der Schritt des Simulierens durch Teilen einer jeden Zelle der Vielzahl von Zellen (108; 110; 112) in virtuelle Teilbereiche und durch Simulieren von Störzuständen und Datenübertragungseffizienz in den Teilbereichen durchgeführt wird.

11. Verfahren nach einem beliebigen der vorstehenden Ansprüche, wobei die Simulierung auf der Basis von zuvor durchgeführten Messungen durchgeführt wird.

12. Verfahren nach einem beliebigen der vorstehenden Ansprüche, wobei der Satz von Ersatzübertragungsparametern für drahtlose Telekommunikation nur dann verwendet wird, wenn der Satz von Ersatzübertragungsparametern in der Vergangenheit nicht während einer vorbestimmten Zeitspanne für drahtlose Telekommunikation verwendet worden ist, und/oder der Satz von Ersatzübertragungsparametern innerhalb eines vorbestimmten Bereichs für zulässige Übertragungsparameter liegt, und/oder der Satz von Ersatzübertragungsparametern die Netzwerkzustände in zumindest einer Zelle der Vielzahl von Zellen (108; 110; 112) nicht um mehr als einen Downgrade-Schwellenwert herunterstuft.

13. Netzwerkentität (200; 700) für ein selbstorganisierendes Telekommunikationsnetzwerk, umfassend:
- Mittel (702) zum Ermitteln von Nebenbedingungen, wobei die Nebenbedingungen mindestens eine der folgenden Bedingungen umfassen:
• Festgelegte Parameter mindestens einer Zelle der Vielzahl von Zellen (108; 110; 112);
• Funkfrequenzen, deren Nutzung für drahtlose Telekommunikation in der Vielzahl von Zellen (108; 110; 112) zulässig ist;
- Mittel (702) zum Ermitteln eines Satzes von aktuellen Übertragungsparametern, wobei der Satz von aktuellen Übertragungsparametern Parameter umfasst, die gegenwärtig in der Vielzahl von Zellen (108; 110; 112) angewendet werden;
- Mittel (702) zum Bewerten mehrerer Kandidatensätze von Ersatzübertragungsparametern, wobei jeder Kandidat geeignet ist, den Satz von aktuellen Übertragungsparametern zu ersetzen;
- Mittel (702) zum Simulieren von Netzwerkzuständen für die Vielzahl von Zellen (108; 110; 112) für jeden Kandidatensatz der mehreren Kandidatensätze;
- Mittel (702) zum Vergleichen der simulierten Netzwerkzustände mit jedem anderen und mit den aktuellen Netzwerkzuständen;
- Mittel (702) zum Ermitteln eines bestens Satzes unter den Kandidatensätzen unter Verwendung des Vergleichsergebnisses, wobei der beste Satz derjenige Kandidatensatz ist, welcher die Netzwerkzustände in der Vielzahl von Zellen optimiert;
- Mittel (702) zum Einstellen des besten Satzes als den Satz von Ersatzübertragungsparametern;
- Mittel (702) zum Verwenden des Satzes von Ersatzübertragungsparametern für drahtlose Telekommunikation in der Vielzahl von Zellen (108; 110; 112).

14. Computerprogramm-Produkt (704) mit Anweisungen (705), welche bei der Ausführung bewirken, dass eine Netzwerkentität (200; 700) ein Verfahren gemäß einem beliebigen der Ansprüche 1-12 durchführt.

## Revendications

1. Procédé de détermination d'un ensemble de paramètres de transmission de remplacement pour une pluralité de cellules (108 ; 110 ; 112) d'un réseau de télécommunication auto-organisé sans fil cellulaire numérique (100) pour des transmissions, le procédé comprenant les étapes suivantes :
- déterminer (S1) des contraintes, les contraintes comprenant au moins un des éléments suivants :
• des paramètres fixes d'au moins une cellule parmi la pluralité de cellules (108 ; 110 ; 112) ;
• des radiofréquences qui peuvent être utilisées pour une télécommunication sans fil dans la pluralité de cellules (108 ; 110 ; 112) ;
- déterminer (S2) un ensemble de paramètres de transmission actuels, l'ensemble de paramètres de transmission actuels comprenant des paramètres actuellement utilisés dans la pluralité de cellules (108 ; 110 ; 112) ;
- évaluer (S3) une pluralité d'ensembles candidats de paramètres de transmission de remplacement en tenant compte des contraintes, chaque ensemble candidat étant adapté pour remplacer l'ensemble de paramètres de transmission actuels ;
- simuler (S4) des conditions de réseau pour la pluralité de cellules (108 ; 110 ; 112) pour chaque ensemble candidat de la pluralité d'ensembles candidats ;
- comparer (S5) les conditions de réseau simulées entre elles et aux conditions de réseau actuelles ;
- déterminer (S6) un meilleur ensemble à partir des ensembles candidats en utilisant les résultats de la comparaison, le meilleur ensemble étant l'ensemble candidat qui optimise les conditions de réseau dans la pluralité de cellules ;
- définir (S7) le meilleur ensemble comme l'ensemble de paramètres de transmission de remplacement ;
- utiliser (S8) l'ensemble de paramètres de transmission de remplacement pour une télécommunication sans fil dans la pluralité de cellules (108 ; 110 ; 112).

2. Procédé selon la revendication 1, dans lequel les radiofréquences autorisées sont des radiofréquences cognitives.

3. Procédé selon l'une quelconque des revendications précédentes, dans lequel les contraintes sont récupérées dans une base de données, et/ou déterminées en effectuant des mesures, et/ou entrées manuellement, et/ou reçues à partir d'au moins une station de base (202) de la pluralité de cellules (108 ; 110 ; 112).

4. Procédé selon l'une quelconque des revendications précédentes, le procédé étant exécuté par une entité de réseau (200 ; 700), qui est associée à une première cellule, la pluralité de cellules (108 ; 110 ; 112) comprenant la première cellule et les cellules étant situées dans une zone voisine de la première cellule.

5. Procédé selon la revendication 4, dans lequel la zone voisine comprend des voisins directs de la première cellule et des voisins des voisins directs.

6. Procédé selon l'une quelconque des revendications précédentes, dans lequel les étapes d'évaluation, de simulation, de comparaison, de détermination du meilleur ensemble, de définition et d'utilisation du meilleur ensemble sont déclenchées par au moins un des éléments suivants :
- un temporisateur périodique ;
- un temporisateur aléatoire ;
- un message de déclenchement ;
- un changement des paramètres de transmission actuels ;
- un changement des contraintes ;
- un seuil de charge de trafic.

7. Procédé selon l'une quelconque des revendications précédentes, dans lequel le procédé est interrompu ou annulé, lorsqu'il est indiqué que l'ensemble de paramètres de transmission actuels doit être changé.

8. Procédé selon l'une quelconque des revendications précédentes, dans lequel l'ensemble actuel de paramètres de transmission provient de stations de base de la pluralité de cellules (108 ; 110 ; 112), et dans lequel le meilleur ensemble de paramètres de transmission est envoyé à chaque station de base (202) de la pluralité de cellules (108 ; 110 ; 112)

9. Procédé selon l'une quelconque des revendications précédentes, dans lequel chaque ensemble de paramètres de transmission comprend au moins un élément parmi
- des temps de transmission ;
- des fréquences de transmission ;
- des puissances de transmission ;
- des paramètres liés au transfert ;
- des paramètres d'antenne.

10. Procédé selon l'une quelconque des revendications précédentes, dans lequel l'étape de simulation est exécutée en divisant chaque cellule de la pluralité de cellules (108 ; 110 ; 112) en sous-zones virtuelles et en simulant des conditions d'interférence et une efficacité de transmission de données dans les sous-zones.

11. Procédé selon l'une quelconque des revendications précédentes, dans lequel la simulation est effectuée sur la base de mesures effectuées précédemment.

12. Procédé selon l'une quelconque des revendications précédentes, dans lequel l'ensemble de paramètres de transmission de remplacement est utilisé pour une télécommunication sans fil, seulement si l'ensemble de paramètres de transmission de remplacement n'a pas été utilisé pour une télécommunication sans fil durant une période prédéterminée auparavant, et/ou l'ensemble de paramètres de transmission de remplacement est à l'intérieur d'une région prédéterminée pour des paramètres de transmission autorisés, et/ou l'ensemble de paramètres de transmission de remplacement ne déclasse pas les conditions de réseau dans au moins une cellule parmi la pluralité de cellules (108 ; 110 ; 112) de plus d'un seuil de déclassement.

13. Entité de réseau (200 ; 700) pour un réseau de télécommunication auto-organisé comprenant :
- des moyens (702) pour déterminer des contraintes, les contraintes comprenant au moins un des éléments suivants :
• des paramètres fixes d'au moins une cellule parmi la pluralité de cellules (108 ; 110 ; 112) ;
• des radiofréquences qui peuvent être utilisées pour une télécommunication sans fil dans la pluralité de cellules (108 ; 110 ; 112) ;
- des moyens (702) pour déterminer un ensemble de paramètres de transmission actuels, l'ensemble de paramètres de transmission actuels comprenant des paramètres actuellement utilisés dans la pluralité de cellules (108 ; 110 ; 112) ;
- des moyens (702) pour évaluer une pluralité d'ensembles candidats de paramètres de transmission de remplacement, chaque ensemble candidat étant adapté pour remplacer l'ensemble de paramètres de transmission actuels ;
- des moyens (702) pour simuler des conditions de réseau pour la pluralité de cellules (108 ; 110 ; 112) pour chaque ensemble candidat de la pluralité d'ensembles candidats ;
- des moyens (702) pour comparer les conditions de réseau simulées entre elles et aux conditions de réseau actuelles ;
- des moyens (702) pour déterminer un meilleur ensemble à partir des ensembles candidats en utilisant les résultats de comparaison, le meilleur ensemble étant l'ensemble candidat qui optimise les conditions de réseau dans la pluralité de cellules ;
- des moyens (702) pour définir le meilleur ensemble comme l'ensemble de paramètres de transmission de remplacement ;
- des moyens (702) pour utiliser l'ensemble de paramètres de transmission de remplacement pour une télécommunication sans fil dans la pluralité de cellules (108 ; 110 ; 112).

14. Produit de programme informatique (704) comprenant des instructions (705) qui, lorsqu'elles sont exécutées, entraînent l'exécution par une entité de réseau (200 ; 700) d'un procédé selon l'une quelconque des revendications 1 à 12.
